# FASCICULE DE BREVET EUROPEEN

(11) **EP 1 301 444 B1**
(45) Date de publication et mention de la délivrance du brevet: **19.10.2005**
(21) Numéro de dépôt: 01954077.2
(22) Date de dépôt: 11.07.2001
(51) Int. Cl.: C03B 35/20, C03B 23/03

(54) **PROCEDE ET DISPOSITIF DE BOMBAGE D'UNE FEUILLE DE VERRE**
VERFAHREN UND VORRICHTUNG ZUM BIEGEN EINER GLASSCHEIBE
METHOD AND DEVICE FOR BENDING A GLASS SHEET

(30) Priorité: 13.07.2000 FR 0009270; 29.11.2000 FR 0015395
(43) Date de publication de la demande: 16.04.2003
(73) Titulaire: SAINT-GOBAIN GLASS FRANCE, 92400 Courbevoie (FR)
(72) Inventeur: GARNIER, Gilles, F-60150 Thourotte (FR); OLIVIER, Thierry, F-60150 Thourotte (FR); MACHURA, Christophe, F-60150 Chevincourt (FR)
(74) Mandataire: Colombier, Christian
(86) Numéro de dépôt international: PCT/FR2001/002238
(87) Numéro de publication internationale: WO 2002/006170

(56) Documents cités:
- EP-A- 0 677 491

## Description

L'invention concerne une technique de bombage d'une feuille de verre, suivi d'une étape de refroidissement. La technique selon l'invention est soit adaptée au bombage d'une feuille de verre notamment destinée à être trempée, soit au bombage de feuilles de verre ensuite refroidies puis assemblées deux à deux pour former un vitrage feuilleté.

Bien qu'elle ne soit pas limitée à de telles applications, l'invention sera plus particulièrement décrite en référence au formage de feuilles de verre destinées à équiper les parties latérales des véhicules automobiles.

Plus particulièrement, l'invention concerne celles de ces techniques selon lesquelles les feuilles de verre sont amenées une à une au travers d'un four de chauffage pour élever leur température à une température voisine de la température de ramollissement, les feuilles de verre étant convoyées sur un lit de rouleaux. Les feuilles de verre sont ensuite conduites, dès la sortie du four, à une station de bombage dans laquelle une forme inférieure vient soulever une feuille de verre pour venir la presser contre une forme supérieure pour obtenir la forme souhaitée. La feuille de verre est ensuite redéposée sur le convoyeur pour être conduite à la station de refroidissement telle qu'une station de trempe.

Ces techniques de bombage sont notamment décrites dans le document US-A-4,872,898. Ce document décrit notamment une technique selon laquelle une feuille de verre est transportée sur un convoyeur à rouleaux au travers d'un four tunnel dans lequel sa température est amenée jusqu'à sa température de ramollissement, puis est conduite jusqu'à une station de bombage. Dans la station de bombage la feuille de verre est soulevée du convoyeur par un cadre possédant la forme que l'on souhaite conférer à la feuille de verre. Le cadre est discontinu de façon à pouvoir traverser le lit de rouleaux sur lequel repose initialement la feuille de verre. Le cadre élève ensuite la feuille de verre pour venir la presser contre une forme pleine supérieure dont la forme est complémentaire de celle du cadre et correspond donc à la forme désirée pour la feuille de verre. Après pressage, le cadre inférieur redescend jusqu'à un niveau inférieur au lit de rouleaux et redépose ainsi la feuille de verre sur ledit lit de rouleaux. Les rouleaux se remettent ensuite en mouvement pour conduire la feuille de verre jusqu'à la station de trempe.

D'autres documents décrivent des variantes de ce type de technique. Notamment en ce qui concerne le cadre inférieur et plus particulièrement sa configuration pour permettre son passage au travers du lit de rouleaux. D'autres documents décrivent encore des variantes de conceptions des rouleaux au sein de la station de bombage toujours pour faciliter le passage du cadre inférieur.

Outre la particularité du cadre inférieur qui vient traverser le lit de rouleaux qui fait office de convoyeur, ce type de technique se caractérise par le fait que l'opération de bombage s'opère en dehors du four ou tout au moins d'une enceinte maintenue en température. Ce type de technique doit ainsi être considérée comme une technologie à froid, ce qualificatif définissant le lieu de la station de bombage en dehors d'une enceinte maintenue en température ; cela signifie que la maîtrise du positionnement des outils de bombage est plus simple que dans le cas des technologies à chaud, et qu'en contrepartie le procédé de bombage est une course contre le temps puisque dès la sortie du four, la feuille de verre va se refroidir ; les modifications de l'opération de bombage ou de ses conditions sont de ce fait délicates et limitées.

Par ailleurs, les développements récents notamment de l'industrie automobile tendent vers une demande toujours accrue de vitrages de formes complexes, avec en particulier des courbures très prononcées ; parallèlement la qualité optique exigée est de plus en plus élevée. En outre, l'épaisseur des vitrages est également réduite.

Concernant le formage des vitrages latéraux pour l'industrie automobile sur un outil selon cette technologie, le sens de défilement des feuilles de verre lors de leur passage dans le four sur le convoyeur à rouleaux est imposé par les contraintes ultérieures d'utilisation. En effet, il n'est pas souhaité de voir apparaître les marques, selon une direction sensiblement verticale lorsque la feuille de verre est en condition d'utilisation, que peuvent laisser les rouleaux lors de la montée en température ; si de telles marques existent, elles deviennent effectivement très visibles selon certaines incidences pour un observateur qui se place par exemple face au véhicule automobile. De ce fait la direction de défilement desdites feuilles de verre est imposée pour voir ces marques selon une direction sensiblement horizontale et donc quasi-invisibles pour un observateur.

Les demandes actuelles des constructeurs imposent par ailleurs des bombages importants selon la direction verticale après montage de la feuille de verre sur le véhicule automobile. Ce bombage important va donc correspondre à une direction de bombage correspondant à celle du convoyeur dans le four. Il est ainsi délicat de pouvoir transporter les feuilles de verre après bombage sur un convoyeur à rouleaux, ceux-ci étant perpendiculaires à la direction de bombage, sans risque de casse ou de déformation des feuilles de verre, celles-ci n'étant plus alors supportées que par leur partie centrale. Il est en outre souhaitable, notamment pour une bonne reproductibilité du procédé, de conserver la forme obtenue après pressage et ne pas la voir évoluer entre la station de pressage et la station de refroidissement.

Des solutions pour éviter une déformation de la feuille de verre après son passage dans la station de pressage ont déjà été proposées. Le document EP-A-523 017 décrit notamment l'utilisation d'une navette ou cadre mobile qui possède la forme finale de la feuille de verre pour conduire celle-ci de la station de bombage à la station de refroidissement. Le document US-A-4,433,993 prévoit en outre une navette qui suit une direction transversale à la direction du convoyeur traversant le four. Ces techniques permettent de prendre en charge la feuille de verre immédiatement après pressage de façon à conserver la forme obtenue et conduire rapidement la feuille de verre vers la zone de refroidissement. Ces techniques présentent toutefois des inconvénients ; tout d'abord le déplacement de la navette nécessite un indexage à chaque transfert de sorte que la feuille de verre soit parfaitement réceptionnée. D'autre part, la feuille de verre étant supportée à sa périphérie par un cadre, le refroidissement n'est pas homogène ; cet inconvénient est particulièrement pénalisant lorsque les feuilles de verre sont recuites ou semi-trempées pour la réalisation de vitrages feuilletés, ou bien lorsqu'elles sont trempées. En effet, il apparaît dans ces différents cas des problèmes au niveau des bords qui conduisent à une fragilité du vitrage.

Les inventeurs se sont ainsi donné pour mission la mise au point d'une technique de bombage, particulièrement bien adaptée au bombage de feuille de verre mince, qui présente les avantages des techniques évoquées précédemment, notamment l'absence de marquages visibles lorsque le vitrage est utilisé, mais qui n'en présente pas les inconvénients, et notamment qui permette de réaliser un refroidissement ultérieur des feuilles de verre sans problème en périphérie des feuilles de verre.

Ce but a été atteint selon l'invention par un procédé de bombage d'une feuille de verre comprenant le chauffage de la feuille de verre, le transport de la feuille de verre suivant un trajet sensiblement horizontal jusqu'à une station de bombage entre deux formes, la mise en forme de la feuille de verre par pressage entre les deux formes, le refroidissement de la feuille de verre dans une station adaptée, des moyens comportant des rouleaux en forme recevant la feuille de verre après bombage, lesdits rouleaux en forme étant orientés parallèlement à la direction définie sur la feuille de verre par sa direction d'amenée dans la station de bombage.

Selon l'invention, après la phase de pressage, la feuille de verre est redéposée après pressage et donc après sa mise en forme sur des rouleaux eux-mêmes en forme qui vont permettre de conserver la forme obtenue et éviter une déformation complémentaire non voulue. Pour satisfaire ce résultat, les rouleaux sont orientés parallèlement à la direction définie sur la feuille de verre par sa direction d'amenée dans la station de bombage ; c'est-à-dire que dans le cas de vitrages latéraux pour l'automobile qui comportent un bombage principal selon la direction verticale lors de leur utilisation et qui défilent dans le four selon cette direction verticale, les rouleaux en forme qui réceptionnent la feuille de verre après pressage sont orientés perpendiculairement à la direction verticale de la feuille de verre lorsque celle-ci est montée sur un véhicule automobile.

Selon une réalisation préférée de l'invention, les moyens comportant les rouleaux en forme sont au moins une navette, avantageusement mobile entre la station de bombage et une station de refroidissement.

L'utilisation comme moyens comportant les rouleaux en forme d'une navette qui de préférence est mobile entre la station de bombage et une station de refroidissement permet de venir interposer, de façon aisée, les rouleaux en forme entre la forme supérieure et le lit de rouleaux qui convoie la feuille de verre depuis le four de chauffage jusqu'à la station de bombage.

Selon une première variante de réalisation de l'invention, la feuille de verre est transportée vers la station de refroidissement selon une direction latérale par rapport à la direction d'amenée de ladite feuille de verre vers la station de bombage. Selon cette réalisation, les rouleaux en forme sont donc disposés de façon à former un lit de réception latéral et avantageusement perpendiculaire par rapport au convoyeur d'amenée dans la station de bombage. Selon une telle réalisation, l'invention peut encore prévoir une station de refroidissement de part et d'autre du convoyeur d'amenée. Une telle réalisation consiste alors soit à convoyer alternativement les feuilles de verre de chacun des côtés par exemple à l'aide d'une même navette, soit par exemple à l'aide de deux navettes chacune comportant des rouleaux en forme. Cette dernière réalisation peut notamment permettre d'augmenter les cadences de production.

Selon une seconde variante de réalisation selon l'invention, la feuille de verre est maintenue au contact de la forme supérieure de bombage après pressage et elle subit une rotation d'un angle de 90° pour ensuite être transportée vers la station de refroidissement selon sa direction d'amenée vers la station de bombage. L'invention prévoit ainsi selon cette variante de positionner les rouleaux en forme parallèlement aux rouleaux du convoyeur d'amenée depuis le four jusqu'à la station de bombage. Une telle configuration autorise une conception linéaire qui présente essentiellement l'avantage de modifier des installations existantes en ajoutant simplement un élément de rotation.

Selon une dernière variante de l'invention, il est prévu de combiner les deux premières variantes, c'est-à-dire qu'il est prévu de pouvoir convoyer les feuilles de verre après pressage vers une station de refroidissement alignée au convoyeur d'amenée vers la station de bombage et vers au moins une station de refroidissement positionnée latéralement. Les feuilles de verre sont alors avantageusement véhiculées par des navettes chacune associée à une station de refroidissement, notamment pour augmenter les cadences de production.

Une réalisation avantageuse de l'invention prévoit que la feuille de verre est mobile sur la navette comportant les rouleaux en forme. Une telle réalisation permet en outre de limiter les risques de marquage sur le verre, la feuille de verre ne restant pas immobile sur les rouleaux en forme. En effet, à ce stade du procédé, la feuille de verre est encore suffisamment chaude pour risquer d'être marquée si elle reste immobile sur des rouleaux. Bien qu'un tel marquage ne soit pas orienté selon une direction apparente de façon gênante pour un observateur, il peut tout de même être souhaitable de prévenir l'apparition de telles marques pour une meilleure qualité optique.

Concernant le déplacement de la navette ou plus exactement des moyens portant les rouleaux en forme, l'invention prévoit deux possibilités ; selon une première réalisation, ladite navette effectue un mouvement depuis la station de bombage jusqu'à l'entrée de la station de refroidissement pour déposer la feuille de verre sur un nouveau convoyeur, par exemple à rouleaux. Selon une seconde réalisation plus particulièrement adaptée au cas de plusieurs stations de refroidissement, la navette pénètre dans la station de refroidissement et supporte la feuille de verre pendant au moins une partie du temps de refroidissement ; la feuille de verre figée est alors reprise par un convoyeur, par exemple à rouleaux, ceux-ci n'étant plus nécessairement en forme. Dans les deux cas, le passage de la navette au convoyeur de la station de refroidissement se fait naturellement par l'entraînement des rouleaux en forme de la navette qui conduit la feuille de verre sur le convoyeur de la station de refroidissement.

Dans une réalisation préférée de l'invention, il est prévu que la feuille de verre obéira à un mouvement de va-et-vient sur la navette. Cette réalisation peut notamment permettre d'avoir une navette de longueur limitée et sur laquelle la feuille de verre ne restera pas immobile jusqu'à son transfert sur le convoyeur de la station de refroidissement.

Selon un autre type de réalisation de l'invention, les moyens comportant les rouleaux en forme sont au moins une navette, avantageusement mobile entre la station de bombage et une station d'attente.

Une réalisation avantageuse de cette dernière réalisation prévoit que les rouleaux en forme portés par la navette évacuent la feuille de verre bombée vers au moins une station de refroidissement selon une direction latérale par rapport à la direction d'amenée de ladite feuille de verre vers la station de bombage.

Une telle réalisation de l'invention consiste à utiliser une navette d'évacuation qui est amenée après le bombage de la feuille de verre, depuis une position d'attente, sous la forme supérieure qui par exemple peut retenir ladite feuille de verre, celle-ci étant ensuite redéposée sur la navette. Les rouleaux en forme sont alors actionnés pour évacuer la feuille de verre vers une station de refroidissement, prévue selon une direction latérale. Dès qu'elle quitte les rouleaux en forme de la navette, la feuille de verre est avantageusement prise en charge par un convoyeur traversant la station de refroidissement, ledit convoyeur étant par exemple constitué de rouleaux en forme. Dans une variante avantageuse de l'invention, deux stations de refroidissement sont prévues latéralement de part et d'autre de la direction d'amenée de la feuille de verre vers la station de bombage. Une telle configuration permet d'augmenter les cadences de production ; avantageusement les feuilles de verre sont évacuées alternativement vers l'une et l'autre station de refroidissement. Pour se faire, les rouleaux en forme sont actionnés alternativement dans un sens de rotation puis dans l'autre. Il est encore avantageusement prévu de pouvoir modifier un tel cycle par exemple en cas d'incident sur une station de refroidissement de sorte que toutes les feuilles de verre soient évacuées au moins temporairement vers une seule station de refroidissement.

La réalisation ci-dessus présentée nécessite une position ou station d'attente pour la navette d'évacuation durant l'opération de bombage d'une feuille de verre. Selon la configuration présentée, cette position d'attente est avantageusement prévue dans l'alignement du convoyeur du four, c'est-à-dire dans l'alignement de la direction d'amenée de la feuille de verre vers la station de bombage.

L'invention prévoit encore une variante de réalisation selon laquelle la position d'attente d'une telle navette d'évacuation est prévue latéralement par rapport à la direction d'amenée de la feuille de verre vers la station de bombage, et la station de refroidissement est prévue dans l'alignement de cette même direction d'amenée de la feuille de verre vers la station de bombage et donc dans l'alignement du convoyeur du four. Selon cette réalisation la feuille de verre subit une rotation d'un angle de 90° avant d'être déposée sur la navette d'évacuation.

L'invention propose encore un dispositif pour la mise en oeuvre du procédé précédemment décrit. Ce dispositif de bombage selon l'invention comprend un four de chauffage d'une feuille de verre, un dispositif de support et de transport de la feuille de verre dans un plan sensiblement horizontal traversant le four jusqu'à une station de bombage comprenant elle-même deux formes de bombage, une forme inférieure traversant le dispositif de transport pour aller presser la feuille de verre contre une forme supérieure, cette dernière comportant des moyens pour retenir une feuille de verre après sa mise en forme, et ledit dispositif de bombage comprenant encore au moins une station de refroidissement, au moins une navette, portant des rouleaux en forme recevant une feuille de verre après pressage, mobile entre la station de bombage et une autre station, et les rouleaux en forme étant orientés parallèlement à la direction définie sur la feuille de verre par sa direction d'amenée dans la station de bombage.

Le dispositif de support et de transport de la feuille de verre est avantageusement un convoyeur à rouleaux, qui se termine éventuellement par un système à coussin d'air dans la station de bombage.

Le dispositif de bombage ainsi décrit permet après l'étape de pressage d'une feuille de verre de maintenir celle-ci au contact de la forme supérieure, de faire pénétrer une navette comportant des rouleaux en forme dans la station de bombage pour recevoir la feuille de verre bombée et conserver la forme de celle-ci jusqu'à la station de refroidissement.

Une première réalisation d'un dispositif selon l'invention prévoit avantageusement une navette mobile entre la station de bombage et une station de refroidissement.

Selon une première variante de cette réalisation de l'invention, la direction de déplacement de la navette est latérale par rapport à la direction d'amenée de la feuille de verre depuis le four vers la station de bombage. Conformément à cette réalisation, les rouleaux en forme sont par exemple disposés selon une direction perpendiculaire aux rouleaux du convoyeur d'amenée de la feuille de verre depuis le four de chauffage.

Selon une seconde variante de cette réalisation de l'invention, la direction de déplacement de la navette est dans le prolongement de la direction d'amenée de la feuille de verre depuis le four vers la station de bombage et la forme supérieure pivote d'un angle de 90° après pressage. Cette autre réalisation consiste donc après pressage, alors que la feuille de verre est maintenue contre la forme supérieure, à faire pivoter ladite forme supérieure pour ensuite redéposer la feuille de verre bombée sur les rouleaux en forme de la navette, lesdits rouleaux étant parallèles aux rouleaux du convoyeur d'amenée depuis le four.

Une réalisation préférée de l'invention selon cette première réalisation prévoit que les rouleaux en forme de la navette sont des rouleaux moteurs ; cette réalisation permet à la feuille de verre d'être mise en mouvement dès qu'elle est déposée sur la navette.

De préférence encore, les rouleaux en forme ont un mouvement de rotation alternée pour permettre un mouvement de va-et-vient de la feuille de verre sur la navette, notamment durant le déplacement de celle-ci.

Dans une variante de réalisation de l'invention, la navette pénètre la station de refroidissement. La rotation alternée des rouleaux en forme est alors particulièrement intéressante.

Une seconde réalisation d'un dispositif selon l'invention prévoit avantageusement une navette mobile entre la station de bombage et une station d'attente.

Selon cette seconde réalisation de l'invention, les rouleaux en forme sont des rouleaux moteurs selon au moins un sens de rotation.

Cette seconde réalisation du dispositif selon l'invention consiste donc essentiellement en une navette mobile entre une station d'attente et la station de bombage, ladite navette portant les rouleaux en forme qui sont mis en rotation dès que la feuille de verre bombée est déposée pour évacuer ladite feuille de verre vers une station de refroidissement. Les rouleaux en forme portés par la navette sont ainsi positionnés sous la forme supérieure, avantageusement dans le prolongement d'un convoyeur à rouleaux en forme qui traverse la station de refroidissement. La feuille de verre est ainsi transférée des rouleaux en forme de la navette aux rouleaux en forme dudit convoyeur sans interruption.

Concernant la forme supérieure de bombage, elle comporte avantageusement des moyens d'aspiration pour retenir la feuille de verre après pressage. Il est encore possible de prévoir des moyens de soufflage pour notamment accélérer la dépose de la feuille de verre sur la navette. De tels moyens de soufflage ne sont bien entendu utilisés que lorsque les moyens d'aspiration ne le sont plus. L'invention prévoit en outre que la forme supérieure soit mobile selon une direction verticale notamment pour diminuer le temps de dépose sur la navette en effectuant un mouvement de descente pour rapprocher la forme supérieure de la navette. Une telle réalisation permet en outre de diminuer les risques de casse de la feuille de verre le lâché de celle-ci sur la navette se faisant ainsi depuis une faible hauteur.

Le dispositif et le procédé ainsi décrits selon l'invention permettent d'effectuer le bombage de feuilles de verre selon la technologie à froid précédemment décrite en autorisant notamment une bonne précision de bombage et une bonne qualité optique des feuilles de verre plus particulièrement destinées à être utilisées comme vitrages latéraux sur des véhicules automobiles.

Le dispositif et le procédé selon l'invention permettent en effet de réceptionner les feuilles de verre après pressage sur les rouleaux en forme de la navette et donc de conserver très précisément la forme voulue et d'éviter les marquages visibles par un observateur après montage sur un véhicule. De telles feuilles de verre vont ainsi pouvoir être utilisées comme vitrage monolithique ou assemblées deux à deux pour former des vitrages feuilletés.

En outre, pour optimiser les cadences de production l'invention propose avantageusement des dispositifs qui comportent plusieurs stations de refroidissement.

Dans le cas du premier dispositif selon l'invention, c'est-à-dire dans le cas d'une navette mobile entre la station de bombage et une station de refroidissement, l'invention prévoit avantageusement une station de refroidissement dans le prolongement de la direction du dispositif de transport de la feuille de verre depuis le four vers la station de bombage et/ou au moins une station de refroidissement orientée latéralement par rapport à la direction précédente. Selon une réalisation préférée de l'invention, il est notamment prévu de disposer trois stations de refroidissement, chacune associée à une navette, et la forme supérieure de bombage étant mobile autour d'un axe pour autoriser une rotation de 90°.

Dans le cas du second dispositif selon l'invention, c'est-à-dire dans le cas d'une navette mobile entre la station de bombage et une station d'attente, l'invention prévoit avantageusement deux stations de refroidissement disposées latéralement, de part et d'autre de la direction d'amenée de la feuille de verre vers la station de bombage. Selon cette réalisation, une seule navette d'évacuation est nécessaire pour alimenter les deux stations de refroidissement, les rouleaux étant animés d'un mouvement de rotation dans un sens ou dans l'autre, de préférence alternativement pour deux feuilles de verre consécutives de façon à évacuer alternativement deux feuilles de verre bombées consécutivement vers les deux stations de refroidissement.

D'autres détails et caractéristiques avantageux de l'invention ressortiront ci-après de la description d'exemples de réalisation de l'invention en référence aux figures 1 à 4, qui représentent,
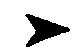 **figure 1,** une vue schématique d'une ligne de bombage et de refroidissement illustrant la technologie à laquelle se rapporte l'invention,
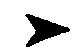 **figures 2 et 2a,** deux schémas d'une première réalisation d'un dispositif selon l'invention,
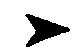 **figure 3,** un schéma d'un second exemple de réalisation selon l'invention,
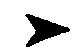 **figure 4,** un schéma de la seconde réalisation représentée sur la figure 3 après l'étape de pressage,
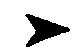 **figure 5,** un schéma d'une troisième réalisation selon l'invention,
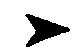 **figures 6 et 6a,** deux schémas d'une quatrième réalisation selon l'invention.

Les différentes figures ne sont pas représentées à l'échelle pour en simplifier la compréhension.

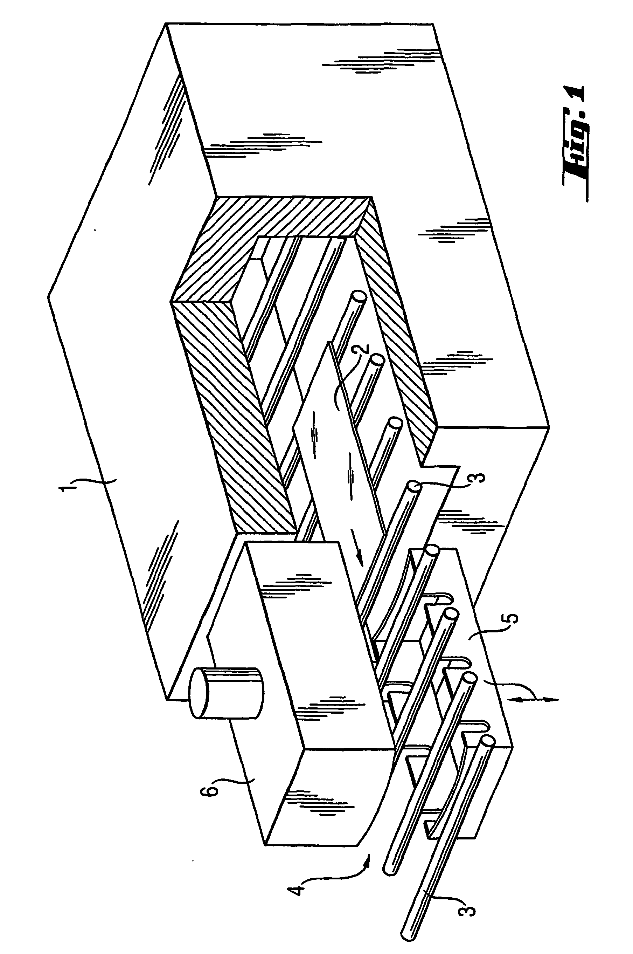

Sur la figure 1 est représenté le four 1 dans lequel une feuille de verre 2 défile sur un convoyeur à rouleaux 3. Durant son séjour dans le four 1, la feuille de verre 2 est amenée à sa température de ramollissement. La feuille de verre 2 est ensuite conduite toujours supportée par le convoyeur 3 jusqu'à une station de bombage 4. Dans la station de bombage 4, est disposé un cadre 5 sous le plan défini par le convoyeur à rouleaux 3. Lorsque la feuille de verre 2 arrive au-dessus de ce cadre, des organes non représentés sur les figures permettent d'assurer un positionnement précis de la dite feuille de verre, puis son mouvement est arrêté par l'arrêt des rouleaux dans la zone de bombage. Le cadre de bombage 5 traverse alors le lit de rouleaux 3 pour venir soulever la feuille de verre. Comme évoqué précédemment, le cadre de bombage 5 possède la forme que l'on souhaite conférer à la feuille de verre et est conçu de façon à pouvoir traverser le lit de rouleaux 3 ; soit le cadre 5 est interrompu, soit les rouleaux de la zone de bombage sont adaptés pour laisser passer le cadre 5 d'une position passe à une position haute, par exemple à l'aide de systèmes du type vérin hydraulique. De telles réalisations sont connues de l'homme du métier. Le cadre de bombage 5 ayant pris en charge la feuille de verre 2 vient presser celle-ci contre une forme de bombage 6, avantageusement pleine positionnée au-dessus du cadre 5.

Dans le cas de feuille de verre 2 destinée à équiper les parties latérales de véhicules automobiles, le sens de défilement des feuilles de verre 2 sur le convoyeur à rouleaux 3 est imposé de façon à ce qu'un observateur regardant un véhicule automobile de face ne puisse voir d'éventuelles marques laissées par les rouleaux du convoyeur 3 et ceci quelle que soit l'incidence d'observation. Comme il l'a été expliqué précédemment, il ne faut pas pouvoir observer de marques qui auraient une direction verticale sur la feuille de verre 2 lorsque celle-ci est mise en place sur un véhicule automobile. Cela signifie que l'axe de rotation des rouleaux du convoyeur 3 doit correspondre à la direction horizontale de la feuille de verre 2 lorsque celle-ci est montée sur un véhicule automobile.

Par ailleurs, le bombage principal qui doit être conféré à la feuille de verre 2 est orienté selon la direction verticale de la feuille de verre lorsque celle-ci est sur un véhicule automobile. Cela signifie que la direction principale de bombage conférée à la feuille de verre 2 après pressage est perpendiculaire à l'orientation des rouleaux du convoyeur 3. Si la feuille de verre 2 devait être redéposée après pressage sur ce convoyeur 3, ledit convoyeur 3 ne serait pas apte à réceptionner ladite feuille de verre 2 de manière satisfaisante pour conserver sa forme et de pas risquer une casse de celle-ci, ladite feuille de verre 2 ne pouvant être supportée que par sa partie centrale ; une telle position conduirait inévitablement soit à une déformation complémentaire de la feuille de verre 2 qui n'est pas totalement supportée et encore à une température élevée, soit à un basculement de la feuille de verre 2 conduisant à une casse probable lors d'un contact sur un rouleau du convoyeur.

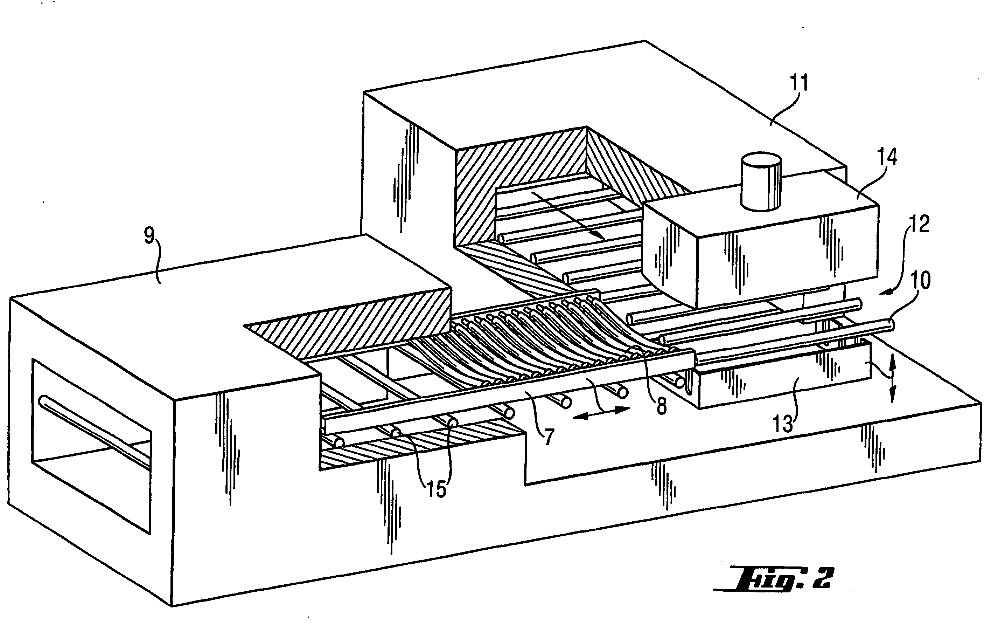

La technique de l'invention notamment décrite sur les figures 2 à 6 permet de prévenir ces risques et de conserver la forme voulue déjà conférée à la feuille de verre 2 lors du pressage dans la station de bombage. L'invention consiste à réceptionner la feuille de verre sur une navette comportant des rouleaux en forme dont la disposition est prévue pour que la forme concave des rouleaux supporte la forme de bombage principale de la feuille de verre.

La figure 2 illustre un dispositif selon l'invention dans lequel, la feuille de verre 2 est déposée après pressage sur une navette 7 comportant des rouleaux en forme 8, et est ensuite conduite vers une station de refroidissement 9 disposée selon une trajectoire perpendiculaire au convoyeur d'amenée 10 traversant le four 11 et conduisant la feuille de verre 2 jusqu'à la station de bombage 12. La navette 7 et ses rouleaux en forme 8 est mieux illustrée sur la figure 2a. Le principe de fonctionnement de l'invention consiste lorsque la feuille de verre 2 arrive dans la station de bombage 12 à la prendre en charge par le cadre de bombage 13 qui vient la presser contre la forme supérieure 14. Des moyens d'aspiration, non représentés sur les figures, retiennent ensuite la feuille de verre au contact de la forme supérieure pendant que le cadre de bombage 13 redescend dans sa position inférieure et que la navette 7 vient s'intercaler entre le convoyeur 10 et la forme supérieure 14. Les moyens d'aspiration sont alors arrêtés et la feuille de verre est réceptionnée par les rouleaux en forme 8 de la navette 7. Optionnellement, il peut être prévu des moyens de soufflage pour aider au dépôt de la feuille de verre. Il peut encore être prévu un mouvement descendant vertical de la forme supérieure 14 avant de relâcher la feuille de verre sur la navette 7. La navette 7 est ensuite déplacée vers la station de refroidissement 9 et la feuille de verre 2 est transférée de la navette 7 vers le convoyeur de refroidissement 15 qui traverse ladite station de refroidissement 9. Le transfert est effectué par une rotation motrice des rouleaux en forme 8, à l'aide de tous moyens connus de l'homme du métier et non représentés sur les figures. En outre, ces moyens entraînant la rotation des rouleaux en forme 8 peuvent être actionner dès la dépose de la feuille de verre 2 sur la navette 7 pour éviter que la feuille de verre reste immobile et ainsi prévenir tous risques de marquage du verre par les rouleaux 8. Il est également possible de prévoir une rotation alternée des rouleaux 8 pour obtenir un mouvement de va-et-vient sur la navette 7 durant le déplacement de celle-ci jusqu'à la station de refroidissement 9. Concernant le déplacement de la navette 7, celui-ci peut se faire jusqu'à l'entrée de la station de refroidissement 9 ou bien la navette 7 peut pénétrer dans ladite station de refroidissement et transférer la feuille de verre au convoyeur 15, par exemple lorsque la feuille de verre 2 est parfaitement figée.

Bien entendu, la représentation faite sur la figure 2 peut être réalisée de manière symétrique, c'est-à-dire que la station de refroidissement 9 pourrait être sur la gauche du convoyeur d'amenée 10. L'invention prévoit encore la possibilité d'avoir deux stations de refroidissement 7 l'une à gauche et l'autre à droite, associées alors à deux navettes 7.

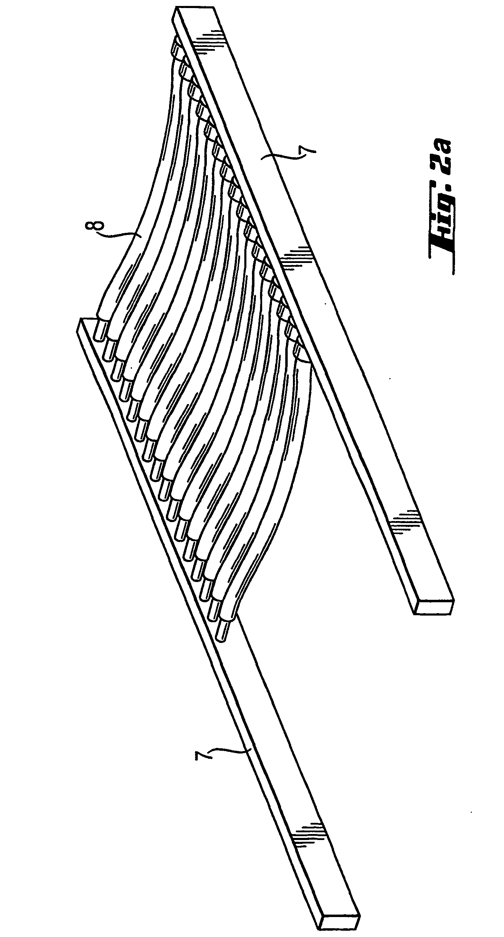

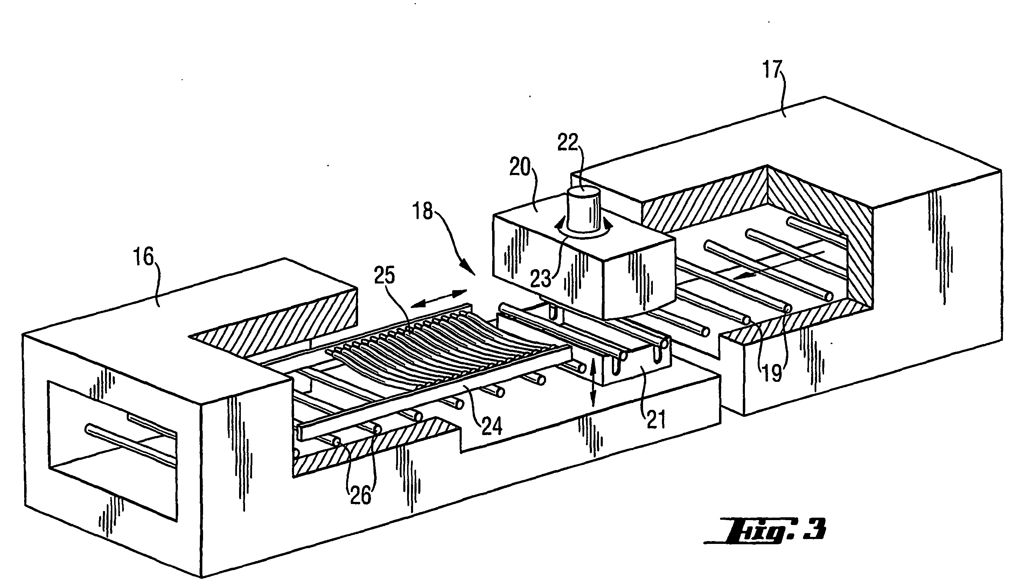

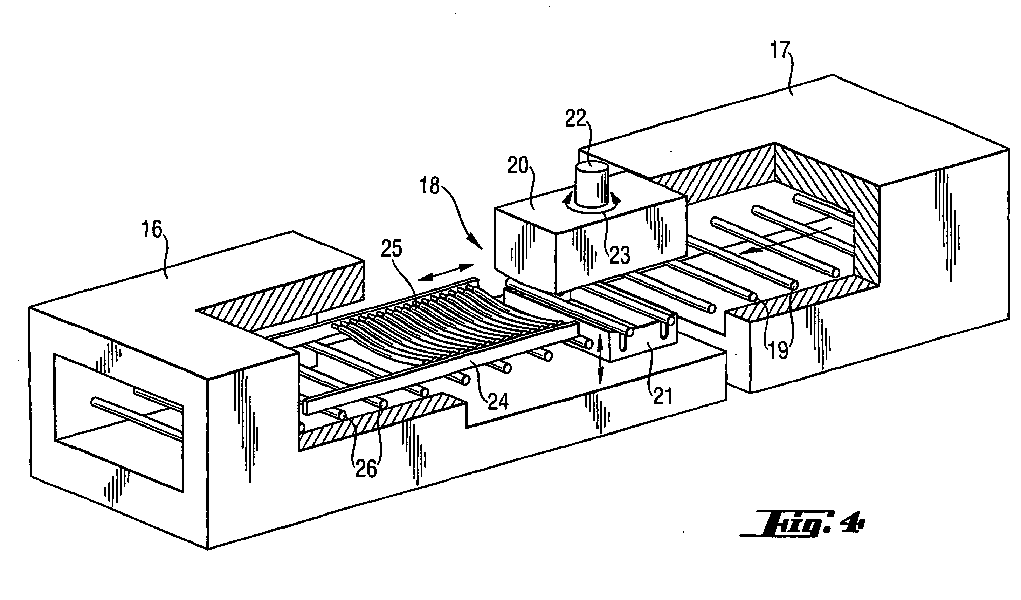

Les figures 3 et 4 illustrent un autre exemple de réalisation de l'invention selon lequel la station de refroidissement 16 est installée dans l'alignement du four 17, de la station de bombage 18 et du convoyeur 19 traversant le four 17 et amenant la feuille de verre 2 jusqu'à la station de bombage 18. Le principe de fonctionnement des outillages est identique à celui de la réalisation de la figure 2 ; la différence essentielle consiste à opérer une rotation d'un angle de 90° de la feuille de verre alors que celle-ci est encore au contact de la forme supérieure 20 et immédiatement après le pressage entre ladite forme supérieure 20 et le cadre inférieur 21. La rotation de la feuille de verre est obtenue par une rotation de la forme supérieure autour d'un axe support 22, illustrée par la flèche 23. La feuille est ensuite redéposée, comme dans le cas de la figure 2 sur la navette 24 comportant des rouleaux en forme 25. La navette 24 se déplace ensuite jusqu'à la station de refroidissement 16 et la feuille de verre 2 est transférée au convoyeur de refroidissement 26. La figure 3 illustre ainsi cette réalisation lorsque la forme supérieure 20 est en position de pressage et la figure 4 illustre la même réalisation, la forme supérieure 20 ayant tournée d'un angle de 90°.

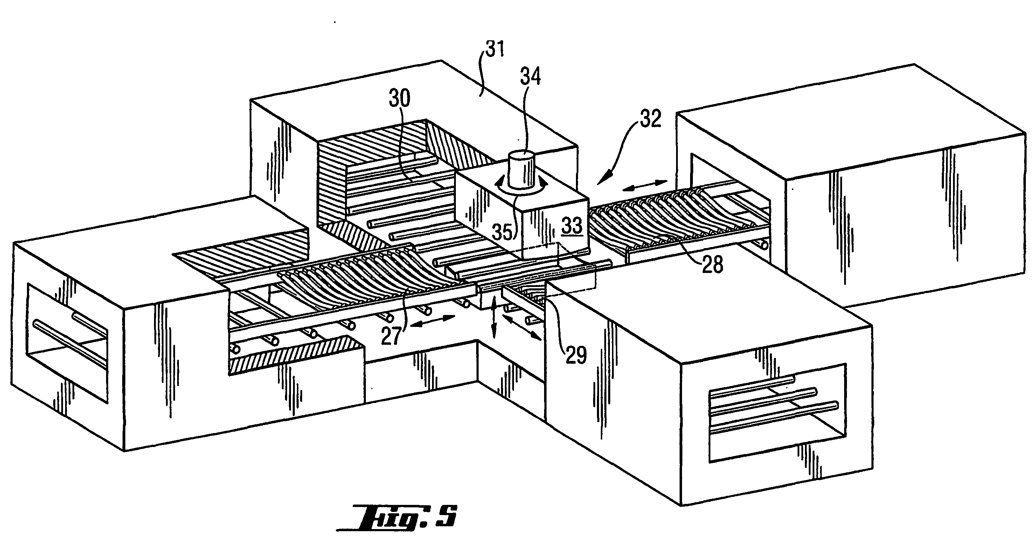

La figure 5 est un dernier exemple de réalisation selon lequel il est prévu trois navettes 27, 28, 29, associées à trois stations de refroidissement, non représentées sur cette figure. Les trois navettes permettent pour deux d'entre elles 27 et 28 de transférer latéralement les feuilles de verre comme illustré sur la figure 2 et la troisième 29 autorisant un transfert des feuilles de verre dans l'alignement du convoyeur 30, du four 31, et de la station de bombage 32, comme illustré sur les figures 3 et 4. La navette 29 fonctionne bien entendu avec une forme supérieure de bombage 33 associée à un axe 34 autorisant une rotation de 90° indiquée par la flèche 35.

La représentation faite sur cette figure 5 permet notamment d'optimiser les cadences de production, les temps de déplacement des navettes ne pouvant plus être limitatifs.

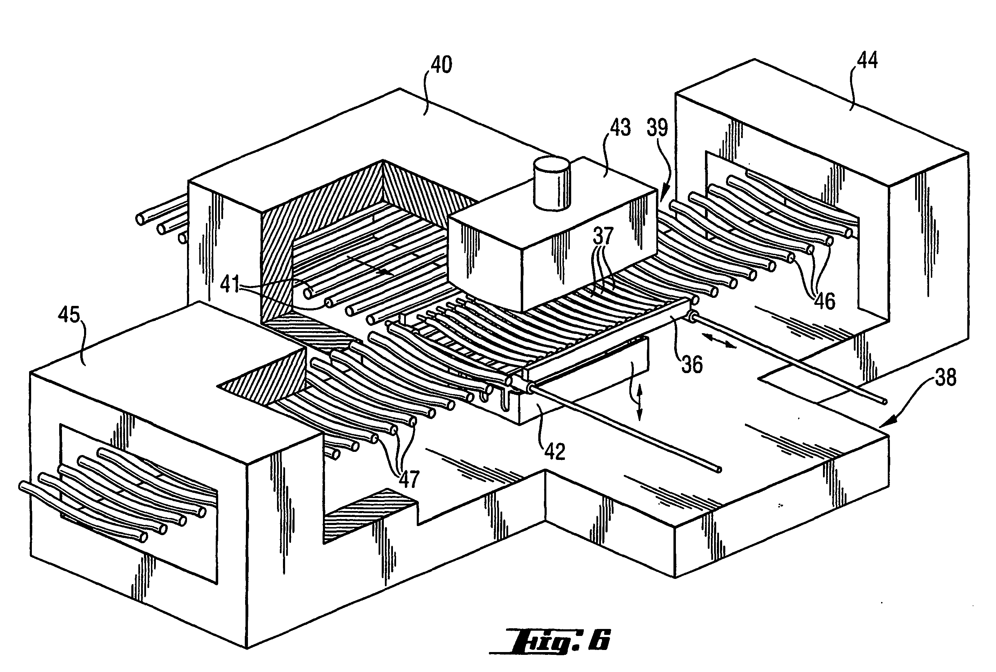

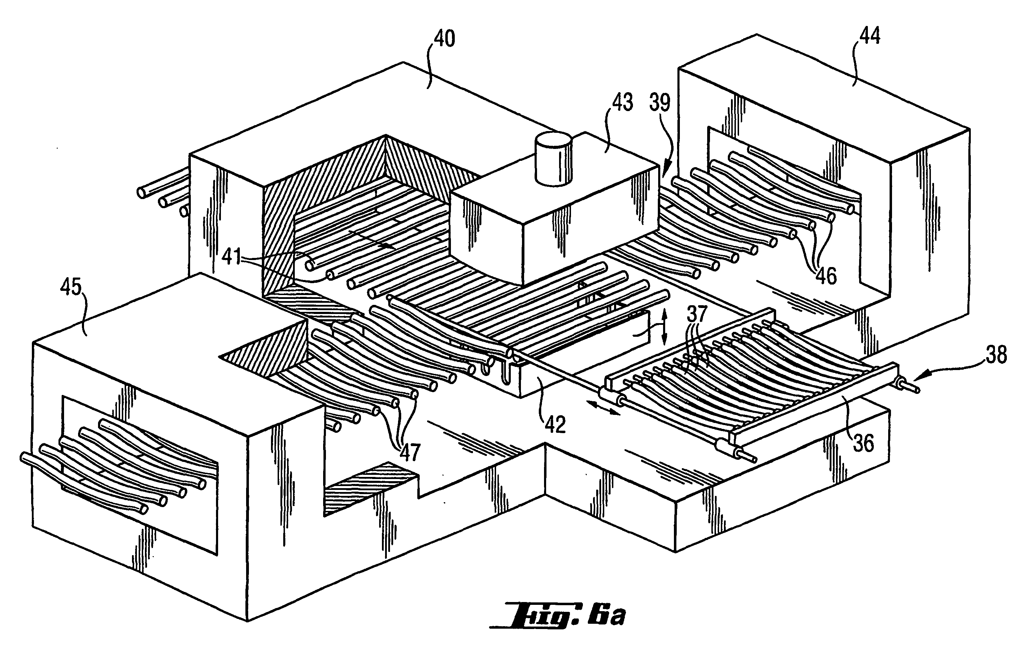

Les figures 6 et 6a illustrent un autre mode de réalisation de l'invention selon lequel la navette 36 portant les rouleaux en forme 37 est mobile entre une station d'attente 38 et la station de bombage 39. Comme précédemment, une feuille de verre issue du four 40 et convoyée par un lit de rouleaux 41 est amenée jusqu'à la station de bombage 39 où elle est bombée à l'aide de deux formes 42,43. La feuille de verre est ensuite redéposée sur les rouleaux en forme 37 de la navette 36. Dès que la feuille de verre est au contact desdits rouleaux en forme 37, ceux-ci sont mis en rotation/par un dispositif non représenté sur les figures pour entraîner la feuille de verre vers une station de refroidissement 44 ou 45. La feuille de verre est ainsi transférée des rouleaux en forme 37 aux rouleaux 46 ou 47, également en forme. Ces rouleaux en forme 46 ou 47 constituent un convoyeur traversant respectivement les stations de refroidissement 44 et 45. Les feuilles de verre bombées sont ainsi évacuées, de préférence une sur deux, vers chacune des stations de refroidissement 44 et 45.

Cette réalisation d'un dispositif selon l'invention illustré par les figures 6 et 6a consiste donc à utiliser une navette 36 mobile entre la station de bombage 39 et la station d'attente 38. La figure 6a illustre la navette 36 positionnée dans la station de bombage 39 et donc en position pour évacuer une feuille de verre vers l'une ou l'autre des stations de refroidissement 44,45. La figure 6a illustre la navette 36 dans la station d'attente et donc lors d'une opération de bombage d'une feuille de verre.

Le dispositif ainsi présenté sur les figures 6 et 6a permet, comme dans le cas des variantes de l'invention illustrées par les figures 2 à 5, de réceptionner la feuille de verre bombée sur une navette comportant des rouleaux en forme dont la disposition est prévue pour que la forme concave des rouleaux supporte la forme de bombage principale de la feuille de verre.

Par ailleurs quel que soit le mode de réalisation de l'invention, les déplacements des navettes et éventuellement celui de la forme supérieure, ainsi que le déclenchement de l'aspiration pour retenir la feuille contre la forme supérieure et la rotation des rouleaux en forme de la navette peuvent être automatisés comme toutes les autres étapes durant le bombage et le refroidissement des feuilles de verre.

## Revendications

1. Procédé de bombage d'une feuille de verre comprenant le chauffage de la feuille de verre jusqu'à une température de ramollissement, le transport de la feuille de verre suivant un trajet sensiblement horizontal jusqu'à une station de bombage (12, 18, 32, 39) entre deux formes, la mise en forme de la feuille de verre par pressage entre les deux formes (13, 14) (21, 20) (42, 43), le refroidissement de la feuille de verre dans une station adaptée (9, 16, 44, 45), **caractérisé en ce que** des moyens comportant des rouleaux en forme (8, 25, 37) reçoivent la feuille de verre après bombage et **en ce que** les rouleaux sont orientés parallèlement à la direction définie sur la feuille de verre par sa direction d'amenée dans la station de bombage (12, 18, 32, 39).

2. Procédé selon la revendication 1 **caractérisé en ce que** les moyens sont au moins une navette (7, 24, 27, 28, 29, 36), de préférence mobile entre la station de bombage (12, 18) et une station de refroidissement (9, 16).

3. Procédé selon la revendication 1 ou 2 **caractérisé en ce que** la feuille de verre est transportée vers la station de refroidissement (9, 44, 45) selon une direction latérale par rapport à la direction d'amenée de ladite feuille de verre vers la station de bombage (12, 39).

4. Procédé selon l'une des revendications 1 ou 2 **caractérisé en ce que** la feuille de verre est maintenue au contact de la forme supérieure de bombage (20) après le pressage, **en ce qu'**elle subit une rotation d'un angle de 90°, et **en ce qu'**elle est transportée vers la station de refroidissement (16) selon sa direction d'amenée vers la station de bombage (18).

5. Procédé selon l'une des revendications 2 à 4 **caractérisé en ce que** la feuille de verre est mobile sur la navette (7, 24, 27, 28, 29, 36).

6. Procédé selon la revendication 5 **caractérisé en ce que** la feuille de verre obéit à un mouvement de va-et-vient sur la navette (7, 24, 27, 28, 29, 36).

7. Procédé selon la revendication 1 **caractérisé en ce que** les moyens sont au moins une navette mobile (36) entre une station d'attente (38) et la station de bombage (39).

8. Procédé selon la revendication 2 ou 7 **caractérisé en ce que** les rouleaux en forme (8, 37) portés par la navette (7, 36) évacuent la feuille de verre bombée vers au moins une station de refroidissement (9, 44, 45) selon une direction latérale par rapport à la direction d'amenée de ladite feuille de verre vers la station de bombage (39).

9. Procédé selon l'une des revendications précédentes, **caractérisé en ce que** les rouleaux en forme (8, 25, 37) ont une forme correspondant à la courbure la plus prononcée de la feuille de verre.

10. Procédé selon l'une des revendications précédentes, **caractérisé en ce que** la direction d'amenée dans la station de bombage (12, 18, 32, 39) correspond à la direction verticale de la feuille de verre lorsque celle-ci est montée sur un véhicule automobile.

11. Dispositif de bombage comprenant un four (11, 17, 31, 40) de chauffage d'une feuille de verre, un dispositif (10, 19, 30, 41) de support et de transport de la feuille de verre dans un plan sensiblement horizontal traversant le four jusqu'à une station de bombage (12, 18, 32, 39) comprenant deux formes de bombage (13, 14) (20, 21) (42, 43), une forme inférieure (13, 21, 42) traversant le dispositif de transport pour aller presser la feuille de verre contre une forme supérieure (14, 20, 33, 43), cette dernière comportant des moyens pour retenir une feuille de verre après sa mise en forme, et au moins une station de refroidissement (9, 16, 44, 45) **caractérisé en ce qu'**au moins une navette (7, 24, 27, 28, 29, 36) portant des rouleaux en forme (8, 25, 37) reçoit une feuille de verre après bombage, **en ce qu'**elle est mobile entre la station de bombage et une autre station (9, 16, 38, 44, 45) et **en ce que** les rouleaux en forme sont orientés parallèlement à la direction définie sur la feuille de verre par sa direction d'amenée dans la station de bombage.

12. Dispositif selon la revendication précédente **caractérisé en ce que** la navette (7, 24, 27, 28, 29) est mobile entre la station de bombage (12, 18, 32) et une station de refroidissement (9, 16).

13. Dispositif selon la revendication 11 ou 12 **caractérisé en ce que** la direction de déplacement de la navette (7, 27, 28) est latérale par rapport à la direction d'amenée de la feuille de verre depuis le four (11, 31) vers la station de bombage (12, 32).

14. Dispositif selon la revendication 11 ou 12 **caractérisé en ce que** la direction de déplacement de la navette (24, 29) est dans le prolongement de la direction d'amenée de la feuille de verre depuis le four (17, 31) vers la station de bombage (18,32) et **en ce que** la forme supérieure (20, 33) pivote d'un angle de 90° (23, 35) après pressage.

15. Dispositif selon l'une des revendications 11 à 14 **caractérisé en ce que** les rouleaux en forme (8, 25, 37) sont des rouleaux moteurs.

16. Dispositif selon l'une des revendications 11 à 15 **caractérisé en ce que** les rouleaux en forme (8, 25, 37) ont un mouvement de rotation alternée.

17. Dispositif selon l'une des revendications 11 à 16 **caractérisé en ce que** la navette pénètre la station de refroidissement.

18. Dispositif selon l'une des revendications 11 à 17 **caractérisé en ce qu'**il comporte une station de refroidissement (16) dans le prolongement de la direction du dispositif (19, 30) de transport de la feuille de verre et/ou au moins une station de refroidissement (9, 44, 45) disposée latéralement par rapport audit dispositif (10, 30, 41) de transport.

19. Dispositif selon la revendication 11 **caractérisé en ce que** la navette (36) est mobile entre la station de bombage (39) et une station d'attente (38).

20. Dispositif selon la revendication 19 **caractérisé en ce que** les rouleaux en forme (8, 25, 37) sont des rouleaux moteurs selon au moins un sens de rotation.

21. Dispositif selon l'une des revendications 11 à 20 **caractérisé en ce que** la forme supérieure (14, 20, 33, 43) comporte des moyens d'aspiration.

22. Dispositif selon l'une des revendications 11 à 21 **caractérisé en ce que** la forme supérieure (14, 20, 33, 43) est mobile selon une direction verticale.

## Patentansprüche

1. Verfahren zum Biegen einer Glasscheibe, welches das Erhitzen der Glasscheibe bis auf Erweichungstemperatur, den Transport der Glasscheibe in einer im Wesentlichen horizontalen Bahn bis in eine Biegestation (12, 18, 32, 39) zwischen zwei Formen, die Formgebung der Glasscheibe durch Pressen zwischen den beiden Formen (13, 14) (21, 20) (42, 43) und die Abkühlung der Glasscheibe in einer geeigneten Station (9, 16, 44, 45) umfasst, **dadurch gekennzeichnet, dass** Mittel, die Formrollen (8, 25, 37) umfassen, die Glasscheibe nach dem Biegen aufnehmen, **und dass** diese Rollen parallel zu der Richtung ausgerichtet sind, die von der Glasscheibe durch ihre Zuführungsrichtung in die Biegestation (12, 18, 32, 39) definiert ist.

2. Verfahren nach Anspruch 1, **dadurch gekennzeichnet, dass** die Mittel wenigstens ein vorzugsweise beweglicher Schlitten (7, 24, 27, 28, 29, 36) zwischen der Biegestation (12, 18) und einer Kühlstation (9, 16) sind.

3. Verfahren nach Anspruch 1 oder 2, **dadurch gekennzeichnet, dass** die Glasscheibe zur Kühlstation (9, 44, 45) in einer in Bezug auf die Zuführrichtung der Glasscheibe zur Biegestation (12, 39) seitlichen Richtung transportiert wird.

4. Verfahren nach Anspruch 1 oder 2, **dadurch gekennzeichnet, dass** die Glasscheibe nach dem Pressen in Kontakt mit der oberen Biegeform (20) gehalten wird, dass sie eine Drehung um einen Winkel von 90° erfährt, und dass sie zur Kühlstation (16) in ihrer Zuführungsrichtung zur Biegestation (18) transportiert wird.

5. Verfahren nach Anspruch 2 bis 4, **dadurch gekennzeichnet, dass** die Glasscheibe auf dem Schlitten (7, 24, 27, 28, 29, 36) beweglich ist.

6. Verfahren nach Anspruch 5, **dadurch gekennzeichnet, dass** die Glasscheibe auf dem Schlitten (7, 24, 27, 28, 29, 36) eine hin- und hergehende Bewegung erfährt.

7. Verfahren nach Anspruch 1, **dadurch gekennzeichnet, dass** die Mittel wenigstens ein zwischen einer Bereitschaftsstation (38) und der Biegestation (39) beweglicher Schlitten (36) sind.

8. Verfahren nach Anspruch 2 oder 7, **dadurch gekennzeichnet, dass** die Formrollen (8, 37), die vom Schlitten (7, 36) getragen werden, die gebogene Glasscheibe zu mindest einer Kühlstation (9, 44, 45) in einer seitlichen Richtung in Bezug auf die Zuführungsrichtung der Glasscheibe zur Biegestation (39) bringen.

9. Verfahren nach einem der vorhergehenden Ansprüche, **dadurch gekennzeichnet, dass** die Formrollen (8, 25, 37) eine Form besitzen, die der ausgeprägtesten Krümmung der Glasscheibe entspricht.

10. Verfahren nach einem der vorhergehenden Ansprüche, **dadurch gekennzeichnet, dass** die Richtung der Zuführung in die Biegestation (12, 18, 32, 39) der vertikalen Richtung der Glasscheibe entspricht, wenn diese in ein Kraftfahrzeug eingebaut ist.

11. Biegevorrichtung, die einen Ofen (11, 17, 31, 40) zum Erhitzen einer Glasscheibe, eine Einrichtung (10, 19, 30, 41) zum Tragen und Transportieren der Glasscheibe in einer im Wesentlichen horizontalen Ebene, die den Ofen bis in die Biegestation (12, 18, 32, 39) durchläuft, die zwei Biegeformen (13, 14) (20, 21) (42, 43) umfasst, wobei eine untere Form (13, 21, 42) die Transporteinrichtung durchläuft, um die Glasscheibe an eine obere Form (14, 20, 33, 43) anzudrücken, und letztere Mittel umfasst, um die Glasscheibe nach deren Formgebung zu halten, und mindestens eine Kühlstation (9, 16, 44, 45) umfasst, **dadurch gekennzeichnet, dass** mindestens ein Schlitten (7, 24, 27, 28, 29, 36), der Formrollen (8, 25, 37) trägt, eine Glasscheibe nach dem Biegen aufnimmt, dass er zwischen der Biegestation und einer weiteren Station (9, 16, 38, 44, 45) beweglich ist, und dass die Formrollen parallel zu der Richtung ausgerichtet sind, die von der Glasscheibe durch ihre Richtung der Zuführung in die Biegestation definiert ist.

12. Vorrichtung nach dem vorhergehenden Anspruch, **dadurch gekennzeichnet, dass** der Schlitten (7, 24, 27, 28, 29) zwischen der Biegestation (12, 18, 32) und einer Kühlstation (9, 16) beweglich ist.

13. Vorrichtung nach Anspruch 11 oder 12, **dadurch gekennzeichnet, dass** die Bewegungsrichtung des Schlittens (7, 27, 28) in Bezug auf die Zuführungsrichtung der Glasscheibe von dem Ofen (11, 31) zur Biegestation (12, 32) seitlich ist.

14. Vorrichtung nach Anspruch 11 oder 12, **dadurch gekennzeichnet, dass** die Bewegungsrichtung des Schlittens (24, 29) sich in Verlängerung der Zuführungsrichtung der Glasscheibe von dem Ofen (17, 31) zur Biegestation (18, 32) befindet, und dass die obere Form (20, 33) mit einem Winkel von 90° (23, 35) nach dem Pressvorgang schwenkt.

15. Vorrichtung nach einem der Ansprüche 11 bis 14, **dadurch gekennzeichnet, dass** die Formrollen (8, 25, 37) motorgetriebene Rollen sind.

16. Vorrichtung nach einem der Ansprüche 11 bis 15, **dadurch gekennzeichnet, dass** die Formrollen (8, 25, 37) eine abwechselnde Drehbewegung haben.

17. Vorrichtung nach einem der Ansprüche 11 bis 16, **dadurch gekennzeichnet, dass** der Schlitten in die Kühlstation hineinfährt.

18. Vorrichtung nach einem der Ansprüche 11 bis 17, **dadurch gekennzeichnet, dass** sie eine Kühlstation (16) in Verlängerung der Richtung der Einrichtung (19, 30) für den Transport der Glasscheibe und/oder mindestens eine Kühlstation (9, 44, 45), die in Bezug auf die Transporteinrichtung (10, 30, 41) seitlich angeordnet ist, umfasst.

19. Vorrichtung nach Anspruch 11, **dadurch gekennzeichnet, dass** der Schlitten (36) zwischen der Biegestation (39) und einer Bereitschaftsstation (38) beweglich ist.

20. Vorrichtung nach Anspruch 19, **dadurch gekennzeichnet, dass** die Formrollen (8, 25, 37) in mindestens einer Drehrichtung motorgetriebene Rollen sind.

21. Vorrichtung nach einem der Ansprüche 11 bis 20, **dadurch gekennzeichnet, dass** die obere Form (14, 20, 33, 43) Ansaugmittel umfasst.

22. Vorrichtung nach einem der Ansprüche 11 bis 21, **dadurch gekennzeichnet, dass** die obere Form (14, 20, 33, 43) in einer vertikalen Richtung beweglich ist.

## Claims

1. A method for bending a sheet of glass involving heating the sheet of glass to a softening temperature, transporting the sheet of glass in an essentially horizontal path as far as a station (12,18,32,39) for bending it between two forms, shaping the sheet of glass by pressing between the two forms(13,14)(21,20)(42,43), cooling the sheet of glass in an appropriate station (9,16,44,45), **characterized in that** means comprising shaped rollers (8,25,37) receive the sheet of glass after it has been bent and **in that** the rollers are oriented parallel to the direction defined on the sheet of glass via the direction in which it is conveyed into the bending station (12,18,32,39).

2. The method as claimed in claim 1, **characterized in that** the means are at least one shuttle (7,24,27,28,29,36), preferably able to move between the bending station (12,18) and a cooling station (9,16).

3. The method as claimed in claim 1 or 2, **characterized in that** the sheet of glass is transported to the cooling station (9,44,45) in a direction which is lateral with respect to the direction in which said sheet of glass is conveyed to the bending station (12,39).

4. The method as claimed in one of claims 1 and 2, **characterized in that** the sheet of glass is kept in contact with the upper bending form (20) after pressing, **in that** it undergoes a rotation through an angle of 90°, and **in that** it is transported to the cooling station (16) in the direction in which it is conveyed to the bending station (18).

5. The method as claimed in one of claims 2 to 4, **characterized in that** the sheet of glass can move on the shuttle (7,24,27,28,29,36).

6. The method as claimed in claim 5, **characterized in that** the sheet of glass performs a back-and-forth movement on the shuttle (7, 24, 27, 28, 29, 36).

7. The method as claimed in claim 1, **characterized in that** the means are at least one shuttle (36) that can move between a standby station and the bending station.

8. The method as claimed in claim 2 or 7, **characterized in that** the shaped rollers (8,37) carried by the shuttle (7,36) remove the bent sheet of glass to at least one cooling station (9,44,45) in a direction which is lateral with respect to the direction in which said sheet of glass is conveyed into the bending station (39).

9. The method as claimed in one of preceding claim, **characterized in that** the shaped rollers (8,25,37) have a form corresponding to the most pronounced curvature of the sheet of glass.

10. The method as claimed in one of preceding claim, **characterized in that** the direction in which the sheet of glass is conveyed into the bending station (12,18,32,39) corresponds to the vertical direction of the sheet of glass when the latter is mounted in a motor vehicle.

11. A bending device comprising a furnace (11,17,31,40) for heating a sheet of glass, a device (10,19,30,41) for supporting and transporting the sheet of glass in an essentially horizontal plane through the furnace as far as a bending station (12,18,32,39) comprising two bending forms (13,14)(20,21)(42,43), a lower form (13,21,42) passing through the transport device to press the sheet of glass against an upper form (14,20,33,43), the latter comprising means for holding a sheet of glass after it has been shaped, and at least one cooling station (9,16,44,45), **characterized in that** at least one shuttle (7,24,27,28,29,36) carrying shaped rollers (8,25,37) receives a sheet of glass after bending, **in that** it can move between the bending station and another station (9,16,38,44,45) and **in that** the shaped rollers are oriented parallel to the direction defined on the sheet of glass via the direction in which it is conveyed to the bending station.

12. The device as claimed in preceding claim, **characterized in that** the shuttle (7,24,27,28,29) can move between the bending station (12,18,32) and a cooling station (9,16).

13. The device as claimed in claim 11 or 12, **characterized in that** the direction of travel of the shuttle (7,27,28) is lateral with respect to the direction in which the sheet of glass is conveyed from the furnace (11,31) to the bending station (12,32).

14. The device as claimed in claim 11 or 12, **characterized in that** the direction of travel of the shuttle (24,29) is in the continuation of the direction in which the sheet of glass is conveyed from the furnace (17,31) to the bending station (18,32) and **in that** the upper form (20,33) pivots through an angle of 90° (23,35) after pressing.

15. The device as claimed in one of claims 11 to 14, **characterized in that** the shaped rollers (8,25,37) are driven rollers.

16. The device as claimed in one of claims 11 to 15, **characterized in that** the shaped rollers (8,25,37) have an alternating rotational movement.

17. The device as claimed in one of claims 11 to 16, **characterized in that** the shuttle enters the cooling station.

18. The device as claimed in one of claims 11 to 17, **characterized in that** it comprises a cooling station (16) in the continuation of the direction of the device (19,30) for transporting the sheet of glass and/or at least one cooling station (9,44,45) arranged laterally with respect to said transport device (10,30,41).

19. The device as claimed in claim 9, **characterized in that** the shuttle (36) can move between the bending station (39) and a standby station (38).

20. The device as claimed in claim 19, **characterized in that** the shaped rollers (8,25,37) are rollers which are driven in at least one direction of rotation.

21. The device as claimed in one of claims 11 to 20, **characterized in that** the upper form (14,20,33,43) comprises suction means.

22. The device as claimed in one of claims 11 to 21, **characterized in that** the upper form (14,20,33,43) can move in a vertical direction.
